# EUROPÄISCHE PATENTSCHRIFT

(11) **EP 3 007 833 B1**
(45) Veröffentlichungstag und Bekanntmachung des Hinweises auf die Patenterteilung: **04.07.2018**
(21) Anmeldenummer: 14723081.7
(22) Anmeldetag: 12.05.2014
(51) Int. Cl.: B05D 3/06, B05B 9/03, B23P 19/00, B29C 65/48, B25J 15/00, F16B 11/00

(54) **VERFAHREN ZUR ÜBERPRÜFUNG DER MONTAGESICHERHEIT UND VORRICHTUNG ZUR DURCHFÜHRUNG DES VERFAHRENS.**
METHOD FOR VERIFYING THE ASSEMBLY RELIABILITY AND DEVICE TO CARRY OUT THE METHOD.
MÉTHODE DE CONTRÔLE DE LA FIABILITÉ DE MONTAGE ET DISPOSITIF POUR L' IMPLEMENTATION DE LA METHODE.

(30) Priorität: 14.06.2013 DE 102013211129
(43) Veröffentlichungstag der Anmeldung: 20.04.2016
(73) Patentinhaber: Bayerische Motoren Werke Aktiengesellschaft, 80809 München (DE)
(72) Erfinder: GSCHNEIDINGER, Rainer, 94447 Plattling (DE); LUGER, Andreas, 93437 Furth im Wald (DE)
(86) Internationale Anmeldenummer: PCT/EP2014/059609
(87) Internationale Veröffentlichungsnummer: WO 2014/198472

(56) Entgegenhaltungen:
- WO-A1-02/04131
- DE-A1- 19 645 000
- DE-A1-102011 009 259
- GB-A- 530 563
- "ONSERT Verbindung", , 12. April 2013 (2013-04-12), XP055149208, Gefunden im Internet: URL:http://www.boellhoff.de/static/pdf/dow nloadcenter/DE/ONSERT-DE-0250.pdf [gefunden am 2014-10-27]
- Anonymous: "Tandem-Dosierer | SCA Schucker", , 23. Januar 2013 (2013-01-23), XP055149166, Gefunden im Internet: URL:https://www.sca-schucker.com/content/p rodukte/dosiereinheiten/tandem-dosierer/in dex_ger.html [gefunden am 2014-10-27]
- Mai 2014 Seite ET AL: "Presseinformation: Tandemdosierer für die "endlose" Applikation von Kleberaupen", , 1. Juni 2014 (2014-06-01), XP055149195, Gefunden im Internet: URL:http://www.turmpresse.de/sca/pdf/SCA_1 404_Tandemdosierer.pdf [gefunden am 2014-10-27]

## Beschreibung

Die vorliegende Erfindung betrifft ein Verfahren zur Überprüfung der Montagesicherheit eines an einem Bauteil mittels einer Klebeverbindung festzulegenden Fügeelements, wobei der Klebstoff einem Klebstoffaufnahmebehälter entnommen wird und mittels Bestrahlung mit Licht aus einem Lichtemitter aushärtbar ist, nach dem Oberbegriff des Anspruchs 1. Des weiteren betrifft die Erfindung eine Vorrichtung zur Durchführung des Verfahrens mit einem an einem Roboterarm angeordneten Fügekopf und einer Greifeinrichtung zur Entnahme von Fügeelementen aus der Vorrichtung, wobei die Fügelemente in der Vorrichtung speicherbar angeordnet sind und von einer Vorschubeinrichtung in eine Ausbringposition förderbar sind, nach dem Oberbegriff des Anspruchs 8

Zudem betrifft die Erfindung eine Vorrichtung mit einem ersten und einem zweiten Klebstoffaufnahmebehälter, die mittels einer jeweiligen Fluidleitung mit einem Klebstoffapplikator verbunden sind, nach dem Oberbegriff des Anspruchs 9.

Bei einer gattungsgemäßen Vorrichtung zur Aufnahme von Fügeelementen handelt es sich oftmals um einen Speicher oder ein Magazin, das insbesondere an einem Fügekopf befestigt werden kann.

Bei einer gattungsgemäßen Vorrichtung mit einem ersten und einem zweiten Klebstoffaufnahmebehälter handelt es sich oftmals um eine Bereitstellungs-, oder Ladestation mit einem Dispenser.

Die Fügeelemente können im Querschnitt eine T-förmige Form mit einem Teller und einen Bolzen aufweisen, wobei auf den Teller ein Klebstoff aufgebracht werden kann. Somit kann der Teller des T-förmigen Fügeelements an der Oberfläche eines Bauteils mittels einer Klebeverbindung festgelegt werden und am Bolzen ein zweites Bauteil mittels einer Schraubverbindung oder einer Schnappverbindung festgelegt werden.

In der Fertigung, insbesondere der Serienfertigung von Kraftfahrzeugen, Flugzeugen, Leichtflugzeugen, aber auch Fahrzeugen jeglicher anderer Art, werden heutzutage immer mehr Bauteile, beispielsweise Strukturbauteile im Karosseriebau, aus so genannten Faserverbundwerkstoffen verwendet. Ein solcher Faserverbundwerkstoff ist zum Beispiel kohlenstofffaserverstärkter Kunststoff, auch CFK (carbonfaserverstärkter Kunststoff) genannt. Zu den Vorteilen von CFK gegenüber Metallen gehört unter anderem eine geringe Masse bei hoher Festigkeit. Bei der Verbindung solcher CFK Bauteile mit metallischen Bauteilen sind jedoch besondere Erfordernisse zu beachten. CFK Bauteile können nicht ohne weiteres mit einer Bohrung versehen und mit einem Metallbauteil verbunden werden, da die Verbindungsstelle zwischen dem CFK und dem Metallbauteil korrosionsanfällig ist.

Es wird daher üblicherweise für die Verbindung eines CFK Bauteils mit einem Metallbauteil ein T-förmiges Fügeelement mit einem Teller aus Kunststoff und einem Gewindebolzen aus Metall verwendet, wobei der Teller mit dem CFK Bauteil verklebt und der Gewindebolzen mit dem Metallbauteil verschraubt wird.

Anhand der DE 10 2011 009 259 A1 ist ein Setzsystem bekannt geworden, das einen Fügekopf zum Aufbringen von Fügeelementen auf ein Bauteil mittels einer Klebeverbindung aufweist. Zudem ist anhand dieser Druckschrift ein Verfahren zum Aufsetzen von Fügeelementen auf das Bauteil bekannt geworden.

Ein solcher Fügekopf weist üblicherweise einen Greifer mit einem Lichtemitter, einen Schwenkarm, ein Magazin sowie eine Befestigungsplatte auf. Dabei kann der Fügekopf mittels der Befestigungsplatte an einem Roboterarm befestigt werden. An dem Schwenkarm ist der Greifer mit dem Lichtemitter befestigt, welcher die in dem Magazin in Speicherschienen gespeicherten Fügeelemente einzeln daraus entnimmt. Danach bringt der Schwenkarm des Fügekopfs das vereinzelt entnommene Fügeelement auf einem dafür vorgesehenen Bauteil auf. Anschließend sorgt der Lichtemitter dafür, dass der auf dem Fügeelement aufgebrachte Klebstoff mittels Bestrahlung mit Licht ausgehärtet wird.

Nach der Entnahme des Fügeelements aus der Ausbringposition wird ein anderes Fügeelement der Speicherschiene in die Ausbringposition des Magazins geführt. Dieses Nachtransportieren oder Nachführen eines weiteren Fügeelements in die Ausbringposition des Magazins wird mittels einer sich entspannenden Feder vorgenommen.

Wurde das letzte Fügeelement von dem Schwenkarm mittels des Greifers aus dem Magazin entnommen und auf der Bauteiloberfläche aufgebracht, kann das Magazin des Fügekopfs anschließend an einer Ladestation angekoppelt werden.

Nachdem der Ankoppelvorgang abgeschlossen ist und die Vielzahl von Fügeelementen von der Ladestation an das Magazin übergeben wurden, kann der Schwenkarm des Fügekopfs in oben beschriebener Art und Weise erneut Fügeelemente aus dem Magazin entnehmen und auf dem dafür vorgesehenen Bauteil aufbringen.

Nach dem vorstehend erwähnten Verfahren zum Aufbringen eines T-förmigen Fügeelements auf einer Bauteiloberfläche, wird zunächst Klebstoff auf den Fügeelementen aufgebracht, die Fügeelemente in das Magazin verbracht, anschließend wird das Magazin in seiner Längsrichtung bewegt und der Greifer entnimmt ein Fügeelement aus dem Magazin, um es auf dem Bauteil aufzusetzen, wonach schließlich die Aushärtequelle aktiviert wird.

Anhand der DE 10 2009 057 332 A1 ist eine Ladestation mit einem Dispenser bekannt geworden in welcher der Klebstoffauftrag auf den Teller des T-förmigen Fügeelements mittels des Dispensers beziehungsweise des Klebstoffapplikators stattfindet. Die Fügeelemente können in Schienen eines Zwischenspeichers der Ladestation zwischengespeichert werden und/oder in ein Magazin bewegt werden.

Das Magazin übernimmt die T-förmigen Fügeelemente von der Ladestation, wobei das Fügeelement in der Ausbringposition des Magazins von dem Greifer manuell oder automatisch aus dem Magazin entnommen werden kann und an seiner vorher bestimmten Verarbeitungsposition manuell oder automatisch mittels eines Roboters auf der Bauteiloberfläche aufgebracht wird.

Das Nachtransportieren oder Nachführen eines weiteren Fügeelements in die Ausbringposition des Magazins wird mittels eines federvorgespannten Schiebers vorgenommen.

Nach dem vorstehend erwähnten Verfahren zum Aufbringen eines T-förmigen Fügeelements auf einer Bauteiloberfläche, wird Klebstoff auf die Fügeelemente appliziert, die Fügeelemente in einen Zwischenspeicher oder direkt ein Magazin verbracht, Magazin und Greifer so verschwenkt, dass der Greifer ein Fügeelement aus dem Magazin entnehmen kann, auf der Bauteilfläche aufbringen kann und das Fügeelement zum Schluss mittels Licht bestrahlt wird, so dass der Klebstoff aushärtet.

Die beschriebenen Befestigungsverfahren für Fügeelemente auf einer Bauteiloberfläche haben den Nachteil, dass sie keine Schritte zur Montagesicherung oder Qualitätsprüfung im Ablauf des Befestigungsverfahrens aufweisen. Diese Verfahren sind daher störanfällig und weisen eine geringe Prozesssicherheit auf.

Der vorliegenden Erfindung liegt daher die Aufgabe zu Grunde, ein Verfahren zum Anbringen von Fügeelementen auf einem Bauteil bereitzustellen, welches im Hinblick auf die industrielle Serienfertigung im Verlauf des Befestigungsverfahrens Schritte zur Überprüfung der Montagesicherheit, zur Qualitätssicherung und zur Erhöhung der Prozesssicherheit sowie Verminderung der Störungsanfälligkeit bereitstellt. Auch soll eine Vorrichtung zur Durchführung des Verfahrens und zur Anordnung an einem Fügekopf eines Roboterarms bereit gestellt werden, mit der im Hinblick auf das Anbringen der Fügeelemente auf Bauteilen in der industrielle Serienfertigung eine verminderte Störungsanfälligkeit sowie eine erhöhte Prozesssicherheit erreicht wird.

Zudem ist es Aufgabe der vorliegenden Erfindung, eine Vorrichtung für die Klebstoffapplikation bereit zu stellen, mittels der die Prozesssicherheit erhöht und die Ausfallzeit vermindert wird.

Die Erfindung weist zur Lösung dieser Aufgabe hinsichtlich des Verfahrens die im Anspruch 1 genannten Merkmale auf. Vorteilhafte Ausgestaltungen davon sind in den weiteren Ansprüchen beschrieben. Darüber hinaus weist die Erfindung zur Lösung der Aufgabe hinsichtlich der Vorrichtung zur Durchführung des Verfahrens die im Anspruch 8 genannten Merkmale auf. Zudem weist die Erfindung eine Vorrichtung zur Klebstoffapplikation nach Anspruch 9 auf.

Die Erfindung stellt ein Verfahren zur Überprüfung der Montagesicherheit eines an einem Bauteil mittels einer Klebeverbindung festzulegenden Fügeelements bereit, wobei der Klebstoff einem Klebstoffaufnahmebehälter entnommen wird und mittels Bestrahlung mit Licht aus einem Lichtemitter aushärtbar ist, mit folgenden Schritten:
- der Füllstand des Klebstoffaufnahmebehälters wird überwacht und beim Erreichen eines unteren Schwellenwerts des festgestellten Füllstands des genannten Klebstoffaufnahmebehälters wird eine Einrichtung zur fluidischen Verbindung eines zweiten Klebstoffaufnahmebehälters, dessen Füllstand an Klebstoff höher ist als der des genannten Klebstoffaufnahmebehälters, zur Herstellung einer Fluidverbindung mit einer Klebstoffausbringeinrichtung betätigt;
- die Intensität des vom Lichtemitter ausgestrahlten Lichts wird mittels mindestens eines Sensors überprüft und ein Signal beim Unterschreiten eines Schwellenwerts des vom Sensor aufgenommenen Lichts ausgegeben.

Die Überprüfung des Füllstands des Klebstoffaufnahmebehälters auf einen unteren Schwellwert hin ermöglicht es, den drohenden Leerstand des Klebstoffaufnahmebehälters rechtzeitig zu erkennen. Sobald der Schwellwert des einen Klebstoffaufnahmebehälters erreicht wird, erfolgt ein Umschalten auf einen zweiten Klebstoffaufnahmebehälter. Das Umschalten auf den zweiten Klebstoffaufnahmebehälter kann beispielsweise durch ein pneumatisches Ventil erfolgen und dient dem Zweck, Standzeiten und damit eine Unterbrechung im Ablauf des Verfahrens zu vermeiden.

Durch die Überprüfung der Lichtintensität des Lichts und dem Ausgeben eines Signals beim Erreichen eines Schwellenwerts wird das sichere Aushärten des Klebstoffs während der Bestrahlung mit Licht erreicht.

Die beiden Vorgänge Schwellwertüberwachung des Klebstoffaufnahmebehälters und Überprüfung des vom Lichtemitter ausgestrahlten Lichts sind mindestens für ein unterbrechungsfreies Applizieren von Klebstoff auf die Fügeelemente sowie eine sichere Befestigung der Fügeelemente auf dem Bauteil erforderlich.

Gemäß einer vorteilhaften Weiterbildung des Verfahrens zur Überprüfung der Montagesicherheit ist es vorgesehen, dass der Klebstoff aus jeweils einem der beiden Klebstoffaufnahmebehälter, der den unteren Schwellenwert des festgestellten Füllstands überschreitet, entnommen wird.

Der Zweck der Entnahme des Klebstoffs aus jeweils einem der Klebstoffaufnahmebehälter besteht darin, zu vermeiden, dass während des Ablaufs des Befestigungsverfahrens ein vorzeitiger Leerstand des Klebstoffaufnahmebehälters auftreten kann und der Fügeprozess unterbrochen wird. Das Verfahren ist damit serientauglich.

Daher ist es nicht ausreichend, einen Klebstoffaufnahmebehälter vorzusehen, welcher im normalen Betrieb ausreichend Klebstoff für den Ablauf des Befestigungsverfahrens bereitstellt. Für einen unterbrechungsfreien Betrieb bei der Klebstoffapplikation ist es notwendig, den Zustand des Klebstoffaufnahmebehälters, beispielsweise den Füllstand und den Druck zu überwachen und falls nötig auf einen zweiten Klebstoffaufnahmebehälter umzuschalten.

Gemäß einer vorteilhaften Weiterbildung des Verfahrens zur Überprüfung der Montagesicherheit ist es vorgesehen, dass das Erreichen des unteren Schwellenwerts der beiden Klebstoffaufnahmebehälter mittels mindestens eines Sensors überwacht wird.

Gemäß einer vorteilhaften Weiterbildung des Verfahrens zur Überprüfung der Montagesicherheit ist es vorgesehen, dass für jeden Fügepunkt auf dem Bauteil Fügeparameter für das am Fügepunkt mittels der Klebeverbindung festzulegende Fügeelement definiert werden.

Um die unterschiedliche Lageorientierung von Fügepunkten auf dem CFK Bauteil zu berücksichtigen, ist es vorgesehen, dass für Fügeelemente, welche in unterschiedlicher Lageorientierung angebracht werden sollen, unterschiedliche Fügeparameter definierbar sind.

Bei diesen Fügeparametern handelt es sich beispielsweise um die Ausrichtung des Schwenkarms und den Aufsetzdruck auf das Fügeelement sowie den Kraftschwellwert und die Aufsetzzeit mit welchem das Fügeelement auf das Bauteil aufgesetzt wird.

Gemäß einer vorteilhaften Weiterbildung des Verfahrens ist es vorgesehen, dass die Überprüfung der Intensität des vom Lichtemitter ausgestrahlten Lichts sowie der Temperatur während eines laufenden Bestrahlungsvorgangs des Fügeelements durchgeführt wird.

Um die Intensität des vom Lichtemitter ausgestrahlten Lichts während eines Bestrahlungsvorgangs eines Fügeelements zu überprüfen, kann das Licht in einem definierten Abstand von der Austrittsfläche des Lichtemitter aufgenommen und einem Spektrometer zugeführt werden. Hierdurch kann die Lichtintensität des vom Lichtemitter ausgestrahlten Lichts während der Bestrahlung des Fügeelements gemessen werden und mit einem Schwellenwert der Lichtintensität verglichen werden.

Gemäß einer vorteilhaften Weiterbildung des Verfahrens ist es vorgesehen, dass das Fügelement nach der Bestrahlung mit Licht mittels einer Greifeinrichtung mit einer vorbestimmten Zugkraft beaufschlagt wird.

Zur Kontrolle, ob der Klebstoff an dem Fügepunkt nach dem Bestrahlungsvorgang durch den Lichtemitter ausgehärtet ist, findet eine Kontrolle in Form einer Beaufschlagung des Bolzens des Fügeelements mit einer Zugkraft nach der Klebstoffaushärtung statt. Dabei sind geringe Zugkräfte ausreichend, da damit Fälle nicht erfolgter Aushärtung des Klebstoffs erkannt werden und gleichzeitig keine Schädigung fehlerfrei gesetzter Fügeelemente erfolgt.

Gemäß einer vorteilhaften Weiterbildung des Verfahrens ist es auch vorgesehen, dass die Überprüfung der Intensität des vom Lichtemitter ausgestrahlten Lichts in vorbestimmten Zeitabständen durchgeführt wird.

Die vorbestimmten Zeitabstände zur Überprüfung der Intensität des ausgestrahlten Lichts können als Anzahl von Bestrahlungsvorgängen in einer Steuereinheit hinterlegt sein.

Die Messung der vom Lichtemitter ausgestrahlten Intensität des Lichts kann zwischen einzelnen Bestrahlungsvorgängen stattfinden. Dabei wird der Lichtemitter für eine gewisse Zeitspanne aktiviert, die Lichtintensität über einen Sensor erfasst und mit einem Schwellwert verglichen.

Die Erfindung stellt auch eine Vorrichtung zur Durchführung des Verfahrens bereit, die zur Anordnung an einem Fügekopf eines Roboterarms mit einer Greifeinrichtung zur Entnahme von Fügeelementen aus der Vorrichtung vorgesehen ist, wobei die Fügelemente in der Vorrichtung speicherbar angeordnet sind, von einer Vorschubeinrichtung in eine Ausbringposition förderbar sind, und wobei die Vorschubeinrichtung mindestens einen Betätigungszylinder aufweist, der einen mittels Fluid beaufschlagbaren und die Fügeelemente fördernden Betätigungskolben aufweist.

Zum Zweck der Förderung der Fügeelemente in Richtung der Ausbringposition, wird der Betätigungskolben über Zuführleitungen mit einem Fluid beaufschlagt. Durch die Beaufschlagung mit Fluid wird der Betätigungskolben in Axiallängsrichtung des Betätigungszylinders in Vorschubrichtung bewegt.

Dadurch ist es der Vorrichtung zur Aufnahme von Fügeelementen möglich, gleich bleibend exakte und genau reproduzierbare Vorschubbewegungen des Betätigungskolbens bereit zu stellen, insbesondere bei einer sehr hohen Anzahl aufeinanderfolgender Vorschubbewegungen, wie das üblicherweise in der Serienfertigung von Bau- und Funktionsteilen der Fall ist. Somit werden die Fügeelemente immer exakt und verlässlich in Richtung ihrer Ausbringposition gefördert.

Die Erfindung stellt zudem eine Vorrichtung mit einem ersten und einem zweiten Klebstoffaufnahmebehälter bereit, die mittels einer jeweiligen Fluidleitung mit einem Klebstoffapplikator verbunden sind, wobei jede Fluidleitung ein fluidisch sperrendes Ventil aufweist und die Fluidleitungen in einer gemeinsamen Zuleitung zu dem Klebstoffapplikator münden.

Die Verwendung von zwei Klebstoffaufnahmebehältern, die Überwachung des Füllstands eines Klebstoffaufnahmebehälters auf einen Schwellwert hin und das Umschalten auf einen zweiten Klebstoffaufnahmebehälter bei Unterschreitung des Schwellwerts, ermöglicht der Vorrichtung zur Klebstoffapplikation einen unterbrechungsfreien Betrieb. Dadurch muss der laufende Betrieb der Klebstoffapplikation nicht unterbrochen werden, wie beim Betrieb mit nur einem Klebstoffaufnahmebehälter. Dies wiederum trägt zur Erhöhung der Prozesssicherheit bei.

Die Erfindung wird nachfolgend anhand der Zeichnung näher erläutert, diese zeigt in:
Fig. 1 ein Flussdiagramm einer bevorzugten Ausführungsform des Verfahrens zur Überprüfung der Montagesicherheit
Fig. 2 eine schematische Darstellung der Vorrichtung zur Klebstoffapplikation; und
Fig. 3 eine schematische Darstellung einer Vorrichtung einer an einem Fügekopf angeordnete Vorrichtung zur Durchführung des Verfahrens.

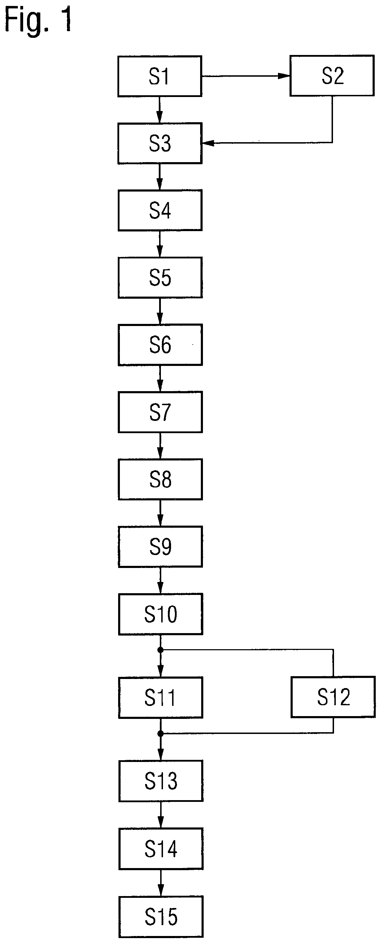

Anhand Fig. 1 der Zeichnung werden die Schritte Verfahrens zur Überprüfung der Montagesicherheit erläutert.

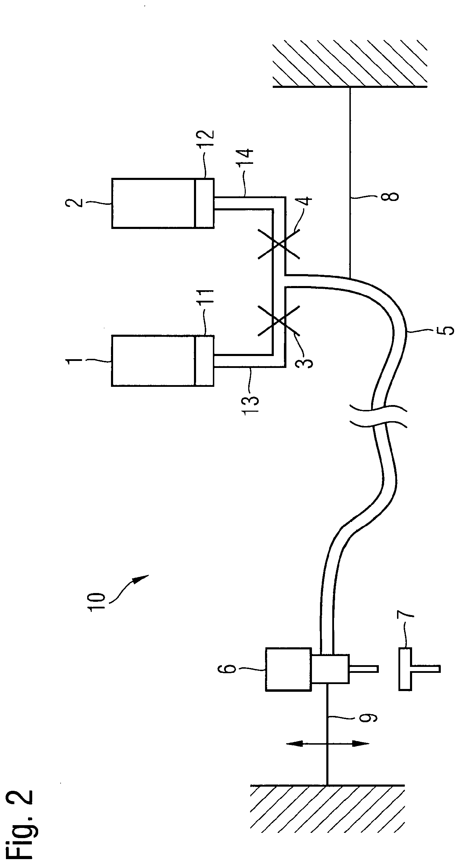

Nach einer Ausführungsform der Erfindung, wird zum kontinuierlichen Aufbringen von Klebstoff auf die Teller der T-förmigen Fügeelemente 7, der Füllstand des Klebstoffaufnahmebehälters 1 (Fig. 2) mittels eines Sensors auf einen unteren Schwellenwert 11 hin überwacht. Solange der Füllstand des Klebstoffaufnahmebehälters 1 höher ist als der untere Schwellenwert 11, wird Klebstoff zum Auftragen auf die Fügeelemente 7 aus dem Klebstoffaufnahmebehälter 1 entnommen (S1).

Sobald der untere Schwellenwert 11 erreicht oder unterschritten wird, sorgt eine nicht näher dargestellte Steuerung dafür, dass das fluidisch sperrende Ventil 3 geschlossen und das fluidisch sperrende Ventil 4 geöffnet wird, so dass Klebstoff aus dem Klebstoffaufnahmebehälter 2 entnommen wird (S2). Hierdurch wird eine kontinuierliche Klebstoffentnahme aus jeweils einem der Klebstoffaufnahmebehälter 1, 2 ermöglicht (S3).

Das Aufbringen des Klebstoffs auf die Fügeelemente 7 erfolgt über den Klebstoffapplikator 6 der Vorrichtung 10 zur Klebstoffapplikation (S4).

Während der vorstehend beschriebenen Schritte, können Parameter wie der Füllstand oder Druck in den Klebstoffaufnahmebehältern 1, 2 mittels Sensoren überwacht und über eine genannte Steuerung gesteuert sowie über einen Bildschirm der Steuerung visualisiert werden. Über den Bildschirm der Steuerung sind weitere Parameter wie Dosiergeschwindigkeit oder Zeitdauer des Klebstoffauftrags auf das Fügeelement 7 überprüfbar und einstellbar. Zudem sind Parameter wie die Dichte und das Gewicht des Klebstoffs über die Steuerung einstell- oder überprüfbar.

Die Fügeelemente 7 können anschließend zunächst in nicht näher dargestellten Speicherschienen der Vorrichtung 10 zur Klebstoffapplikation zwischengespeichert werden und/oder in ein ebenfalls nicht näher dargestelltes Magazin verbracht werden (S5).

In einem nächsten Schritt wird der an einem Schwenkarm eines Fügekopfs befestigte Greifer an das Magazin bewegt, um ein Fügeelement 7 aus der Ausbringposition des Magazins zu entnehmen. Zur genannten Entnahme des Fügeelements 7 kann auch das Magazin zu dem Greifer bewegt werden, so dass sich Greifer und Magazin der Art gegenüberstehen, dass der Greifer das Fügeelement 7 aus dem Magazin entnehmen kann (S6).

Sodann entnimmt der Greifer das Fügeelement 7 aus dem Magazin (S7) und das Magazin wird zurück in seine Ausgangsposition bewegt (S8).

Anschließend wird der Greifer des Schwenkarms in Fügerichtung ausgerichtet. Je nach Lageorientierung des Fügepunkts auf dem Bauteil, kann die Schwerkraft ganz oder teilweise in Fügerichtung oder entgegengesetzt zur Fügerichtung wirken. In einer Fügepunktverwaltung der Steuerung sind für jeden Fügepunkt entsprechend seiner individuellen Lage auf dem Bauteil Parameter einstellbar (S9).

Zu den Parametern für jeden Fügepunkt, welche über die Steuerung einstellbar und überprüfbar sind, gehören neben der Ausrichtung des Schwenkarms oder dem Aufsetzdruck auch der Kraftschwellwert und die Aufsetzzeit des Fügeelements 7.

Unter Berücksichtigung der für den jeweiligen Fügepunkt eingestellten Parameter wird schließlich das Fügeelement 7 an seinem dafür vorgesehenen Fügepunkt aufgesetzt (S10).

Der an dem Schwenkarm befestigte Greifer mit einem nicht näher dargestellten Lichtemitter sorgt dafür, dass der auf dem Teller des T-förmigen Fügeelements 7 befindliche Klebstoff durch Bestrahlung mit Licht aus dem Lichtemitter ausgehärtet wird (S11).

Der Lichtemitter kann den Greifer zum Beispiel kreisförmig umgeben und aus einer LED oder aus einer Lichtquelle bestehen, welche Licht definierter Wellenlänge abgibt,

Die Parameter, welche bei der Bestrahlung oder Belichtung des Fügeelements 7 durch den Lichtemitter mittels Sensoren überwacht oder mit Hilfe der Steuerung eingestellt und visualisiert werden können, sind beispielsweise die Temperatur des Lichtemitters sowie die Zeitspanne und die Lichtintensität des vom Lichtemitter ausgestrahlten Lichts.

Im Betrieb, also während der Bestrahlung des Fügeelements 7 durch den Lichtemitter, kann mittels eines Sensors, der in einem definierten Abstand zu dem Lichtemitter angeordnet ist, Licht abgenommen werden und mittels Spektroskopie die vom Lichtemitter erzeugte Lichtintensität überprüft werden. Zudem kann eine Überprüfung der Temperatur des Lichtemitters auf einen oberen Schwellenwert hin stattfinden. Für den Fall, dass die Lichtintensität einen unteren, definierten Schwellenwert unterschreitet oder die Temperatur einen oberen Schwellenwert überschreitet, wird ein Fehlersignal an die Steuerung ausgegeben. Solange die Lichtintensität den Schwellenwert überschreitet und die Temperatur ihren Schwellenwert unterschreitet findet der normale Betrieb während der Bestrahlung des Fügeelements 7 statt. (S12).

Nach erfolgter Bestrahlung durch den Lichtemitter, wird eine Abzugkontrolle des Fügeelements 7 durchgeführt. Hierfür zieht der Greifer nach der Klebstoffaushärtung an dem Bolzen des Fügeelements 7 mit einer geringen, über die Steuerung einstellbaren Zugkraft. Diese geringe Zugkraft ist im Falle nicht richtig erfolgter Aushärtung des Klebstoffs ausreichend, um das Fügeelement wieder von dem Bauteil zu lösen. Im Falle intakter Aushärtung führt die geringe Zugkraft hingegen zu keiner Schädigung der Klebeverbindung (S13).

Über die Steuerung sind für die Abzugkontrolle des Fügeelements 7 Parameter, wie beispielsweise die Zugkraft, deren Kraftschwellenwert und die Zeit für die Beauftragung der Zugkraft einstellbar.

Erst nach erfolgter Abzugkontrolle gibt der Greifer des Schwenkarms das Fügelement 7 wieder frei (S14).

Nach einer variablen, in der Steuerung einstellbaren Anzahl von Bestrahlungen kann eine zyklische Qualitätsmessung der Lichtintensität des vom Lichtemitter ausgestrahlten Lichts stattfinden. Hierfür wird der Lichtemitter für eine gewisse Zeitspanne aktiviert, die Lichtintensität über einen Sensor erfasst und der ermittelte Istwert der Lichtintensität mit einem Sollwert der Lichtintensität verglichen. Für den Fall, dass der Istwert kleiner als der Sollwert ist, wird ein Fehlersignal an die Steuerung ausgegeben. Ansonsten wird das Verfahren fortgesetzt. (S15).

Zur Durchführung des Verfahrens weist die Erfindung eine Vorrichtung auf, mit einem an einem Roboterarm angeordneten Fügekopf und einem Greifer zur Entnahme von Fügeelementen 7 aus der Vorrichtung. Die Fügelemente 7 sind in der Vorrichtung speicherbar angeordnet und von einer Vorschubeinrichtung in eine Ausbringposition förderbar. Die Vorschubeinrichtung weist mindestens einen Betätigungszylinder mit einem mittels Fluid beaufschlagbaren und die Fügeelemente 7 fördernden Betätigungskolben auf.

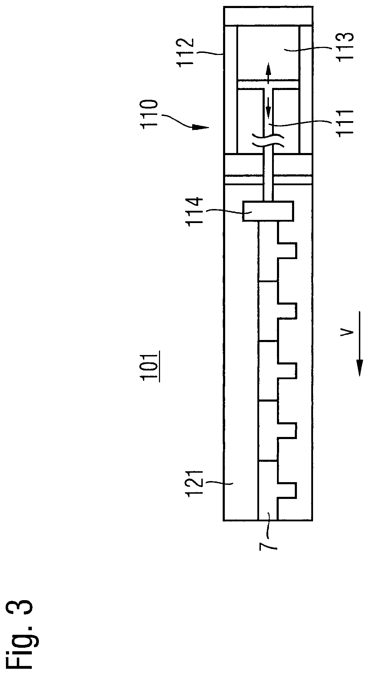

Wie aus Fig. 3 ersichtlich, sind in der Vorrichtung 101 eine Vielzahl von Fügeelementen 7, insbesondere T-förmige Klebebolzen, in einem Führungskörper 121 angeordnet und können in Richtung einer Ausbringposition 103 befördert werden.

Aus einer Ausbringposition 103 sind die Fügeelemente 7 dann mittels des Greifers aus dem Führungskörper 121 beziehungsweise der Aufnahmenut 120 entnehmbar und auf einer vorgesehenen Bauteilfläche aufbringbar.

Zur Förderung der Fügeelemente 7 in Richtung der Ausbringposition ist eine Vorschubeinrichtung 110 vorgesehen.

Diese weist einen Betätigungszylinder 112 und einen Betätigungskolben 111 auf. Der Betätigungszylinder 112 weist eine Kolbenkammer 113 auf, in welche ein Fluid in der Form von Druckluft einbringbar ist.

Zur Bewegung der Fügeelemente 7 in Richtung der Ausbringposition weist der Betätigungskolben 111 in Axiallängsrichtung einen Kolbenstangenkopf 114 auf.

In dem Betätigungszylinder 112 ist der Betätigungskolben 111 in Axiallängsrichtung des Betätigungszylinders 112 bewegbar angeordnet, wobei die Betätigung des Betätigungkolbens 111 mittels des in die Kammer 113 einbringbaren Fluids erfolgt. Die Kraftübertragung auf die Fügeelemente 7 zur Förderung in Richtung der Ausbringposition erfolgt durch den Kolbenstangenkopf 114.

Bei dem Fluid handelt es sich dabei bevorzugt um ein gasförmiges und/oder flüssiges Medium, wie beispielsweise Öl oder Luft, wobei bevorzugt Druckluft zum Einsatz kommt.

Zudem stellt die Erfindung eine Vorrichtung 10 für die Klebstoffapplikation bereit. Die Vorrichtung 10 weist Klebstoffaufnahmebehälter 1, 2 auf, deren Füllstand mittels Sensoren auf einen unteren Schwellenwert 11, 12 hin überprüft wird. Der Klebstoff gelangt aus den Klebstoffaufnahmebehältern 1, 2 über Fluidleitungen 13, 14, welche in einer gemeinsamen Zuleitung 5 münden, zu einem Klebstoffapplikator 6.

Zwischen dem Klebstoffaufnahmebehälter 1, 2 und der gemeinsamen Zuleitung 5 weisen die Fluidleitungen 13, 14 fluidisch sperrende Ventile 3, 4 auf. Bei dem fluidisch sperrenden Ventil 3, 4 kann es sich beispielsweise um einen Kugelhahn oder ein pneumatisches Ventil handeln.

Die Zuleitung 5 kann über eine feste Lagerung 8 beispielsweise an einer waagerechten Fläche befestigt werden und bei der Beschaffenheit der Zuleitung 5 kann es sich um einen flexiblen Schlauch handeln.

Der Klebstoffapplikator 6, welcher über den flexiblen Schlauch mit Klebstoff versorgt wird, ist über eine vertikal verschiebliche Lagerung 9 an einer waagerechten Fläche, beispielsweise einer Wand befestigbar.

Die vertikal verschiebliche Lagerung 9 des Klebstoffapplikators 6 ermöglicht ein Heben und Senken des Klebstoffapplikators 6, so dass der Klebstoffapplikator 6 exakt über dem Kopf des Fügeelements 7 für die Klebstoffapplikation positioniert werden kann.

Mittels der Steuerung kann ein Klebstoffaufnahmebehälter 1, 2 für die Entnahme von Klebstoff ausgewählt werden. Über die Überwachung des Schwellenwerts des Klebstoffaufnahmebehälters 1, 2 und eine Umschaltung auf den zweiten Klebstoffaufnahmebehälter 2, 1 beim Unterschreiten des Schwellenwertes kann kontinuierlich Klebstoff aus den Klebstoffaufnahmebehältern 1, 2 entnommen werden und auf die Fügeelemente 7 appliziert werden (siehe Schritte S1 bis S4 wie oben beschrieben.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Klebstoffaufnahmebehälter
- 2: Klebstoffaufnahmebehälter
- 3: fluidisch sperrendes Ventil
- 4: fluidisch sperrendes Ventil
- 5: Zuleitung
- 6: Klebstoffapplikator
- 7: Fügeelement
- 8: feste Lagerung
- 9: verschiebliche Lagerung
- 10: Vorrichtung
- 11: Schwellenwert
- 12: Schwellenwert
- 13: Fluidleitung
- 14: Fluidleitung
- 101: Vorrichtung
- 110: Vorschubeinrichtung
- 111: Betätigungkolben
- 112: Betätigungszylinder
- 113: Kolbenkammer
- 114: Kolbenstangenkopf
- 121: Führungskörper

## Patentansprüche

1. Verfahren zur Überprüfung der Montagesicherheit eines an einem Bauteil mittels einer Klebeverbindung festzulegenden Fügeelements (7), wobei der Klebstoff einem Klebstoffaufnahmebehälter (1) entnommen wird und mittels Bestrahlung mit Licht aus einem Lichtemitter aushärtbar ist, **gekennzeichnet durch** folgende Schritte:
- es wird der Füllstand des Klebstoffaufnahmebehälters (1) überwacht (S1) und beim Erreichen eines unteren Schwellenwerts (11) des festgestellten Füllstands des genannten Klebstoffaufnahmebehälters (1) eine Einrichtung (4) zur fluidischen Verbindung eines zweiten Klebstoffaufnahmebehälters (2), dessen Füllstand an Klebstoff höher ist als der des genannten Klebstoffaufnahmebehälters (1), zur Herstellung einer Fluidverbindung mit einer Klebstoffausbringeinrichtung (10) betätigt (S2);
- es wird die Intensität des vom Lichtemitter ausgestrahlten Lichts mittels mindestens eines Sensors überprüft und ein Signal beim Unterschreiten eines Schwellenwerts des vom Sensor aufgenommenen Lichts ausgegeben (S12, S15).

2. Verfahren nach Anspruch 1, **dadurch gekennzeichnet, dass** der Klebstoff aus jeweils einem der beiden Klebstoffaufnahmebehälter (1, 2), der den unteren Schwellenwert (11, 12) des festgestellten Füllstands überschreitet, entnommen wird (S3).

3. Verfahren nach Anspruch 1 oder 2, **dadurch gekennzeichnet, dass** das Erreichen des unteren Schwellenwerts (11, 12) der beiden Klebstoffaufnahmebehälter (1, 2) mittels mindestens eines Sensors überwacht wird.

4. Verfahren nach einem der vorstehenden Ansprüche, **dadurch gekennzeichnet, dass** für jeden Fügepunkt auf dem Bauteil Fügeparameter für das dort mittels der Klebeverbindung festzulegende Fügeelement (7) definiert werden (S9).

5. Verfahren nach einem der vorstehenden Ansprüche, **dadurch gekennzeichnet, dass** die Überprüfung der Intensität des vom Lichtemitter ausgestrahlten Lichts während eines Bestrahlungsvorgangs des Fügeelements (7) durchgeführt wird (S12).

6. Verfahren nach einem der vorstehenden Ansprüche, **dadurch gekennzeichnet, dass** das Fügelement (7) nach der Bestrahlung mit Licht mittels einer Greifeinrichtung mit einer vorbestimmten Zugkraft beaufschlagt wird (S13).

7. Verfahren nach einem der vorstehenden Ansprüche, **dadurch gekennzeichnet, dass** die Überprüfung der Intensität des vom Lichtemitter ausgestrahlten Lichts in vorbestimmten Zeitabständen durchgeführt wird (S15).

8. Vorrichtung zur Durchführung des Verfahrens nach einem der vorstehenden Ansprüche, mit einem an einem Roboterarm angeordneten Fügekopf und einer Greifeinrichtung zur Entnahme von Fügeelementen aus der Vorrichtung, wobei die Fügelemente in der Vorrichtung speicherbar angeordnet sind und von einer Vorschubeinrichtung in eine Ausbringposition förderbar sind, **dadurch gekennzeichnet, dass** die Vorschubeinrichtung mindestens einen Betätigungszylinder aufweist, der einen mittels Fluid beaufschlagbaren und die Fügeelemente fördernden Betätigungskolben aufweist.

## Claims

1. A method for checking the security of mounting of a joining element (7) which is to be secured to a component by means of an adhesive connection, wherein the adhesive is taken from an adhesive receptacle (1) and can be cured by means of irradiation with light from a light emitter, **characterised by** the following steps:
the filling level of the adhesive receptacle (1) is monitored (S1) and on reaching a lower threshold value (11) of the detected filling level of the said adhesive receptacle (1) a means (4) for fluidically connecting a second adhesive receptacle (2), the adhesive filling level of which is higher than that of the said adhesive receptacle (1), is actuated in order to produce a fluid connection to an adhesive dispensing means (10) (S2);
- the intensity of the light emitted by the light emitter is checked by means of at least one sensor and a signal is emitted upon falling below a threshold value of the light recorded by the sensor (S12, S15).

2. A method according to Claim 1, **characterised in that** the adhesive is taken from one in each case of the two adhesive receptacles (1, 2) which exceeds the lower threshold value (11, 12) of the detected filling level (S3).

3. A method according to Claim 1 or Claim 2, **characterised in that** the reaching of the lower threshold value (11, 12) of the two adhesive receptacles (1, 2) is monitored by means of at least one sensor.

4. A method according to one of the preceding claims, **characterised in that**, for each joining point on the component, joining parameters for the joining element (7) which is to be secured there by means of the adhesive connection are defined (S9).

5. A method according to one of the preceding claims, **characterised in that** the checking of the intensity of the light emitted by the light emitter is carried out during an irradiation operation of the joining element (7) (S12).

6. A method according to one of the preceding claims, **characterised in that** the joining element (7) after the irradiation with light is subjected to a predetermined tensile force by means of a gripping means (S13).

7. A method according to one of the preceding claims, **characterised in that** the checking of the intensity of the light emitted by the light emitter is carried out at predetermined time intervals (S15).

8. A device for carrying out the method according to one of the preceding claims, with a joining head arranged on a robotic arm and a gripping means for removing joining elements from the device, wherein the joining elements are arranged in storable manner in the device and can be conveyed by an advance means into a dispensing position, **characterised in that** the advance means has at least one actuating cylinder which has an actuating piston which can be acted upon by means of fluid and conveys the joining elements.

## Revendications

1. Dispositif de contrôle de la sécurité de montage d'un élément d'assemblage (7) fixé sur un composant au moyen d'une liaison par collage, la colle étant prélevée d'un réceptacle renfermant de la colle (1) et pouvant être durcie par irradiation avec de la lumière provenant d'un émetteur de lumière,
**caractérisé par**
les étapes suivantes :
- le niveau de remplissage du réceptacle renfermant la colle (1) est surveillé (S1) et, lors de l'atteinte d'une valeur de seuil inférieure (11) du niveau de remplissage déterminé du réceptacle renfermant la colle (1) un dispositif (4) permettant d'obtenir une liaison fluidique avec un second réceptacle renfermant de la colle (2) dont le niveau de remplissage est supérieur à celui du premier réceptacle (1) renfermant de la colle est actionné pour obtenir une liaison fluidique avec un dispositif d'extraction de colle (10) (S2),
- l'intensité de la lumière irradiée par l'émetteur de lumière est surveillée au moyen d'au moins un capteur, et un signal est délivré (S12, S15) lorsque la lumière reçue par le capteur passe au-dessous d'une valeur de seuil.

2. Procédé conforme à la revendication 1,
**caractérisé en ce que**
la colle est respectivement prélevée de l'un des deux réceptacles renfermant de la colle (1, 2) dont le niveau de remplissage déterminé, dépasse la valeur de seuil inférieure (11, 12) (S3).

3. Procédé conforme à la revendication 1 ou 2,
**caractérisé en ce que**
l'atteinte de la valeur de seuil inférieure (11, 12) par les deux réceptacles renfermant de la colle (1, 2) est surveillée au moyen d'au moins un capteur.

4. Procédé conforme à l'une des revendications précédentes,
**caractérisé en ce que**
pour chacun des points d'assemblage sur le composant, des paramètres d'assemblage de l'élément d'assemblage (7) devant être fixé au moyen de la liaison par colle sont définis (S9).

5. Procédé conforme à l'une des revendications précédentes,
**caractérisé en ce que**
le contrôle de l'intensité de la lumière irradiée par l'émetteur de lumière est effectué pendant le processus d'irradiation de l'élément d'assemblage (7) (S12).

6. Procédé conforme à l'une des revendications précédentes,
**caractérisé en ce qu'**
après l'irradiation avec de la lumière, l'élément d'assemblage (7) est soumis à une force de traction prédéfinie au moyen d'un dispositif de préhension (S13).

7. Procédé conforme à l'une des revendications précédentes,
**caractérisé en ce que**
le contrôle de l'intensité de la lumière irradiée par l'émetteur de lumière est effectué à des intervalles de temps prédéfinis (S15).

8. Dispositif permettant la mise en oeuvre du procédé conforme à l'une des revendications précédentes, comprenant une tête d'assemblage montée sur un bras robotisé et un dispositif de préhension permettant de prélever des éléments d'assemblage du dispositif, les éléments d'assemblage pouvant être accumulés dans le dispositif et transportés par un dispositif d'avancement dans une position d'extraction,
**caractérisé en ce que**
le dispositif d'avancement comporte au moins un cylindre d'actionnement qui comporte un piston d'actionnement pouvant être alimenté par un fluide et transportant les éléments d'assemblage.
